# EUROPEAN PATENT APPLICATION

(11) **EP 2 290 900 A1**
(43) Date of publication of application: **02.03.2011**
(21) Application number: 09169009.9
(22) Date of filing: 31.08.2009
(51) Int. Cl.: H04L 29/06, H04L 29/08, G05B 19/418, H02H 3/00

(54) **Checking a configuration modification for an IED**

(71) Applicant: ABB Technology AG, 8050 Zürich (CH)
(72) Inventor: Wimmer, Wolfgang, CH-5323, Rietheim (CH)
(74) Representative: ABB Patent Attorneys

(57) **Abstract**

The present invention proposes a method of checking, in a reliable, secure and delay-free way during regular operation of a Process Control PC or Substation Automation SA system, an intended configuration modification for a mission-critical IED (10) of the system. The IED receives, from an authenticated requestor (20), a modification request directed to IED configuration, parameter or setting data. The IED then checks the requested configuration modification, and rejects it in case no approval or confirmation is made by an approver (21) independent of the requestor, and accepts and implements it otherwise. The IED authenticates the approver prior to receiving the request, and stores, in a local memory (11), a configuration modification plausibility check provided by the approver. The stored plausibility check is then performed, by a plausibility checking unit (12), on the intended modification, and the latter is rejected or approved based on the outcome of the check. Authenticating the approver days or hours in advance eliminates any delay that would otherwise incur when waiting for an on-line or real-time approval.

## Description

### Technical Field

The invention relates to the field of process control and substation automation systems in general, and to security aspects to be observed during configuration and parameterization of individual devices within these systems in particular.

### Background Art

Process Control (PC) systems in general, and power network protection or Substation Automation (SA) systems in particular, perform mission-critical tasks. If one of the constituents of those systems fails, proper and safe operation of a particular industrial process or electrical power substation may be jeopardized. Exemplary mission-critical system constituents of SA systems include so-called Intelligent Electronic Devices (IED) such as protection relays executing protection functions based on data from sensors and issuing control commands such as circuit breaker trips in response thereto. These IEDs can be accessed either locally or from remote, as nowadays they are connected with other devices in the power network protection system via various communication links, enabling, in addition to local access, monitoring, configuration and parameterization of those IEDs from remote.

At the same time, through the use of TCP/IP-based and other wide area communication means, the IEDs become more exposed to and vulnerable against wrong configuration and parameterization, whether intentional or not. In particular, cyber attacks that have breached the existing IT security layer may be able to activate settings or configurations that are dangerous for a power system and might lead to an instantaneous tripping of some lines or a delayed break down of the power network as a consequence of a subsequent real fault situation. In order to protect mission-critical IEDs against local or remote attacks, a number of technologies have been developed.

A commonly used approach for securing the configuration and setting parameters of an IED relies on access rights, in particular role based access (RBAC) where a certain role is entitled to make certain changes / modifications to the configuration of the mission critical devices. A role with assigned access rights is pre-defined and linked to some special users. Those special users have to identify themselves on the mission critical device by means of a password or some other security certificate, before they are allowed to act according to the role. Another approach is to link the right to modify settings and configurations directly to a user, which in turn has to identify him self by means of a password or certificate, generally referred to as a key in the following. Therefore, by limiting the right of modification to a small number of designated people, protection of PC systems is achieved to some extent.

The problem with the above approaches resides in the fact that it neglects the risks due to disgruntled employees knowing the appropriate keys, or due to stolen or misappropriated keys. People within the original security perimeter and having the necessary keys may easily tamper the configuration data. The current solution to this problem is that e.g. the stolen keys or the user identifications and keys of dismissed employees are disabled within the system as fast as possible. However, this is not easy to achieve within a distributed system and may last some time.

Some other approaches are already in use to avoid the situation described above. For example, a "second opinion" or "four eyes" check may be configured on individual IEDs. In this case, an intended configuration modification or parameter change is accepted only if confirmed by two different users that in turn are authenticated based on two different keys. The probability that both keys have been stolen or are lost or belong to disgruntled employees is very low. Hence, a slower and less complex key management procedure may be sufficient.

US 6189032 discloses a client-server system, wherein the server, upon identification of a first user and reception of a service supply request from the first user, determines if an approval by another user is required for providing the service, and obtains such approval by sending an approval request to the another user at a second client terminal.

In this system, the configuration modification proposed by a first user has to wait for a second user's approval. Sometimes, the delay caused by waiting for the second user's approval may be hours, or even days. For configurations that shall be deployed urgently, this is a significant disadvantage.

### Brief Summary of the Invention

It is an object of the present invention to check or verify, in a reliable, secure and delay-free way, intended changes to a configuration or to a parameter setting of an individual IED of a Process Control PC or Substation Automation SA system.

According to one aspect of the present invention, there is provided a method of checking, during regular operation of a PC or SA system, an intended configuration modification for a mission-critical IED of the system. The IED receives, from a requestor, a modification request directed to IED configuration, parameter or setting data. An Identity or role of the requestor is authenticated by the IED itself, based on a first key and in a standard way. The IED then checks the requested configuration modification, and rejects it in case no approval or confirmation is made by an approver independent of the requestor, and accepts and implements it otherwise. The IED authenticates the approver prior to receiving the request, and stores, in a local memory, a configuration modification plausibility check provided by the approver. The latter may either elaborate the check at the IED, via suitable input means, or load the pre-elaborated check in its entirety onto the IED. The stored plausibility check is then performed on the intended modification, and the latter is rejected or approved based on the outcome of the check. Authenticating the approver days or hours in advance eliminates any delay that would otherwise incur when waiting for an on-line or real-time approval. Furthermore, the approver authentication resulting in a plausibility check being stored in executable form at the IED itself eliminates the need to repeatedly secure a communication link to a remote approver.

According to a preferred variant of the invention, the plausibility check for judging whether the modified configuration setting is acceptable or not is embodied as a maintenance schedule able to confirm that a configuration or setting change is presently foreseen for the IED, or as a coded set of rules to be executed as a sequence of program steps, or as an expert system which checks the consistency of the intended modification with respect to past and/or present settings of other IEDs and/or the power network, and which past and/or present settings are obtained and stored by the expert system autonomously.

According to another preferred variant of the invention, the plausibility check involves primary information or knowledge about the PC or SA system, or about the controlled process or substation as a whole. The plausibility check does not just rely on an actual status of an individual piece of primary equipment of the substation as in interlocking, and thus extends beyond a mere check for technical consistency.

According to a preferred embodiment of the invention, the plausibility check verifies conformance of the request with one or a combination of the following secondary criteria: when the modified configuration setting is received, where the modified configuration setting is sent from, what kind of IED is concerned, who is the requestor, what kind of modifications are requested, and whether the modified configuration setting is consistent with prior configurations.

### Brief Description of the Drawings

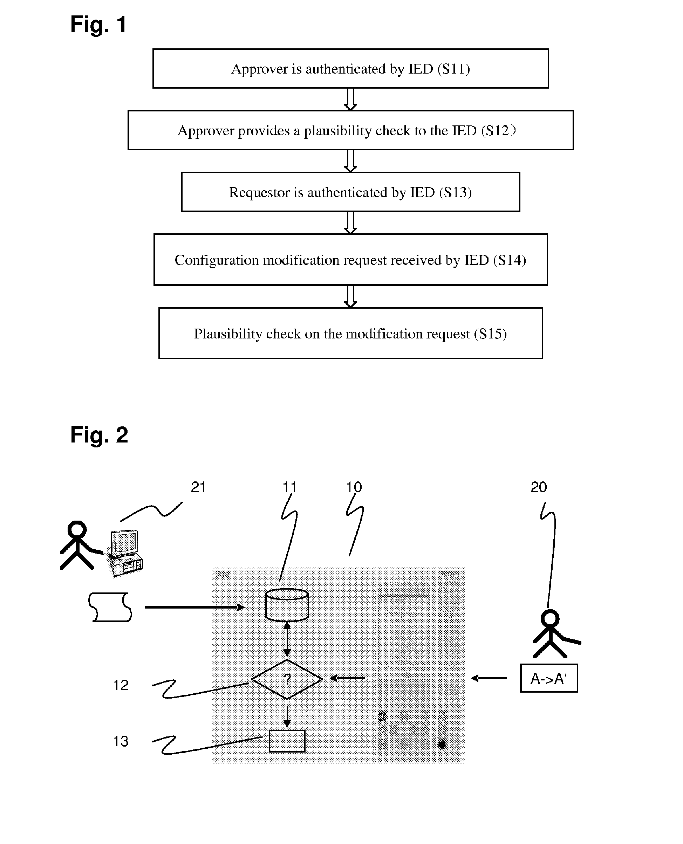

Further embodiments, advantages and applications of the invention are disclosed in the following description and make reference to the accompanying Figs.1 and 2, wherein:
Fig.1 depicts a flowchart of a configuration modification checking method; and
Fig.2 depicts an IED adapted to perform a configuration modification check.

### Preferred Embodiments of the Invention

The proposed configuration checking method involves an approver or second source which pre-authenticates itself on the mission-critical device (IED) to be subsequently re-configured. The IED obtains the second source's approval before accepting a configuration modification request made to the IED by a requestor or first source. The second source identifies itself to the IED by a second key or electronic signature which is different from the key of the first source.

Fig.1 depicts a flowchart illustrating in detail the steps of the plausibility check. The steps are arranged in a chronological order.

In step S11, an approver authenticates itself to the IED by presenting a second key or electronic signature. The IED verifies the second key, and qualifies the approver when the key has successfully passed verification. The approver may be an administrator or operator of a Process Control system or a Substation Automation system, or a processing unit with knowledge about the proper operation of those systems as e.g. instructed by the aforementioned administrator or operator.

In step S12, the authenticated approver uploads a plausibility check to the IED. The IED stores the plausibility check in its memory for subsequent use. The plausibility check can be input by the approver through a Human-Machine Interface (HMI) on the IED. Alternatively, the plausibility check can be transmitted from a remote location by use of available communication links.

In step S13, the requestor logs on to the IED and identifies itself by a first key. Successful verification of the first key authenticates or qualifies the requestor. The first key and second key are different from each other and may even belong to distinct key categories.

In step S14, the authenticated requestor uploads a modified configuration or parameter set to the IED, where it is temporarily stored for immediate plausibility checking.

In step S15, the IED runs the plausibility check provided by the approver for deciding whether the modified configuration or parameter set can be activated or deployed, or whether it has to be rejected. In the latter case, appropriate alarming schemes may be activated instead.

When elaborating the plausibility check, the approver is knowledgeable about the operation of the Process Control system and the role of the IED as a part there of. In other words, the plausibility check is not only focussing on the proper operation of the IED itself, but verifies that the modified configuration is conformant with the Process Control or Substation Automation system as a whole. If the intended configuration modification has any adverse influence on the whole system or any neighbouring critical device, such as an unmotivated trip of a power line, the plausibility check will reject the configuration and prohibit it from being deployed onto the target IED.

The plausibility check may be implemented as a plausibility checking procedure indicating whether the configuration modification is acceptable based on a fixed schedule or a set of rules elaborated by the approver. Alternatively, the plausibility check is performed by a modification checking expert system, which can generate new checking criteria or rules based on an automated learning. The expert system can collect and store dynamic configuration information from all or selected IEDs of the system in an automated manner. The plausibility checking procedure may then compare the modified configuration or parameter set with previous configurations of the target IED, or with previous and present configurations of any other IED of the system.

Furthermore, the checking procedure checks the configuration based on certain secondary criteria. Some exemplary criteria could be: the time elapsed since the last successful configuration modification; the physical location and role of the requestor; the scheduled modification time (e.g. normal working hours?); the type or class of the parameter to be modified; and the value or range of the modified parameter. The checking procedure rejects the modified configuration if it does not meet the above criteria.

The above-listed features of the plausibility checking procedure may be combined arbitrarily, in order to achieve the object of present invention.

The approver does not need to frequently log on to the IED, but may have a regular schedule for maintaining the mission-critical IEDs, and may upload a new version of the plausibility check once the old version is outdated. The updated version of the plausibility check may include new standards of operation, new solutions for coping with problems, or changes in the underlying PC or SA system.

Since the modification plausibility check is stored in the IED, it is possible to approve or reject the modification request while the approver is off-line. A secure communication link needs to be established only when the plausibility check is updated. Moreover, since the checking procedure is already stored in the IED before receiving any modification request, it is not necessary to wait for the approver to log on and make a decision. Therefore, the time delay introduced by the checking procedure is minimized.

Fig.2 depicts an Intelligent Electronic Device (10) with a memory means (11) for storing a configuration modification plausibility check, and a configuration modification plausibility checking unit (12) for approving or rejecting a configuration modification based on the stored plausibility check. The IED is adapted to receive, from an authenticated approver (21), a schedule, rules or a expert system as the configuration modification plausibility check to be stored in the memory. A request is then received from a requestor (20), and if accepted the former is retained in a modified configuration table (13) of the IED.

List of reference symbols
- 10: IED
- 11: memory means
- 12: plausibility checking unit
- 13: IED configuration
- 20: requestor
- 21: approver

## Claims

1. A method of checking a configuration modification for an Intelligent Electronic Device IED (10) in a Process Control PC or Substation Automation SA system, the method comprising:
- receiving, by the IED, a configuration modification request from an authenticated requestor (20), and
- rejecting, by the IED, the requested configuration modification unless an approval is made by an approver (21) independent of the requestor, **characterized in that** the method comprises
- authenticating, by the IED and prior to receiving the request, the approver and storing a configuration modification plausibility check elaborated by the approver in a memory (11) of the IED, and
- approving or rejecting the request based on the stored plausibility check.

2. The method according to claim 1, **characterized in that** the plausibility check includes a maintenance schedule for the IED, or a set of rules, or an expert system, for judging whether the configuration modification is acceptable.

3. The method according to claim 1 or 2, **characterized in that** the plausibility check involves primary information about the PC or SA system, or primary information about a process or substation controlled or automated by the system.

4. The method according to claim 1 or 2, **characterized in that** the plausibility check involves one or several of the following secondary criteria:
- time of reception, or time of becoming effective, of the modified configuration,
- place or role of the requestor,
- type of the IED targeted or type of the modification requested,
- consistency with prior configurations of the IED.

5. An Intelligent Electronic Device IED (10) in a Process Control PC or Substation Automation SA system, with a device functionality configurable during operation of the system and adapted to
- authenticate a requestor (20), and receive a configuration modification request from the authenticated requestor,
- authenticate an approver (21) independent of the requestor (20), and approve or reject the configuration modification request based on the approver, **characterized in that** the IED comprises
- memory means (11) for storing a configuration modification plausibility check provided by the authenticated approver prior to receiving the request, and
- approving unit (12) for approving or rejecting the configuration modification request based on the stored plausibility check.

6. The IED according to claim 5, **characterized in that** the plausibility check involves primary information about the PC or SA system of which the IED is part, or primary information about a process or substation controlled or automated by the system.
